**Europäisches Patentamt**

**European Patent Office**

**Office européen des brevets**

(19)

(11) Veröffentlichungsnummer: **0 055 356**
**B1**

(12) # EUROPÄISCHE PATENTSCHRIFT

(45) Veröffentlichungstag der Patentschrift:
24.10.84

(51) Int. Cl.³: **B 65 D 85/672**, G 11 B 23/02

(21) Anmeldenummer: **81108841.8**

(22) Anmeldetag: **24.10.81**

(54) **Verpackung für Aufzeichnungsträger.**

(30) Priorität: **31.12.80 DE 8034894 U**

(43) Veröffentlichungstag der Anmeldung:
**07.07.82 Patentblatt 82/27**

(45) Bekanntmachung des Hinweises auf die Patenterteilung:
**24.10.84 Patentblatt 84/43**

(84) Benannte Vertragsstaaten:
**AT BE CH DE FR GB IT LI NL SE**

(56) Entgegenhaltungen:
**AT - B - 343 386**
**DE - A - 2 655 254**
**DE - B - 1 300 058**

(73) Patentinhaber: **BASF Aktiengesellschaft,
Carl-Bosch-Strasse 38, D-6700 Ludwigshafen (DE)**

(72) Erfinder: **Schindler, Robert, Hafnerweg 23,
D-7570 Baden-Baden (DE)**
Erfinder: **Huber, Manfred, Bergstrasse 36,
D-7602 Oberkirch (DE)**
Erfinder: **Wiegel, Wolfgang, Friedrich-Diffine-Strasse 34,
D-6719 Kirchheim (DE)**

## Beschreibung

Verpackung für eine Mehrzahl von übereinandergestapelten Aufzeichnungsträgern, insbesondere als Bandwickel oder -spulen auf ringförmigen Wickelkernen bzw. Flanschspulen aufgewickelte bandförmige Aufzeichnungsträger, wobei zumindest einem der Aufzeichnungsträger oder der Wickelkerne oder einer der Flanschspulen eine Zentralhalterung zugeordnet ist, und mindestens zwei in der Draufsicht etwas grösser als die Draufsichtfläche der Aufzeichnungsträger oder der vollen Wickelkerne bzw. der Flanschspulen ausgebildete Boden- und Deckelteile vorgesehen sind, wobei die Boden- und Deckelteile lösbar miteinander verbunden sind und geschlossen eine Tortenschachtelform bilden.

Unter Aufzeichnungsträgern werden dabei jede Art von kreisförmigen oder kreisförmigen aufwickelbaren Aufzeichnungsträgern, insbesondere Magnetaufzeichnungsträger verstanden, z.B. Schallplatten, Videoplatten, Datenplatten, Bildfilme, Magnetfilme und Magnetbänder.

Magnetbänder werden auf flanschlosen Wickelkernen oder Flanschspulen gemäss DIN 45 517 aufgewickelt in den Handel gebracht. Die Kerne oder Spulen sind auf beiden Stirnseiten flach und daher nur über zusätzliche Verriegelungsmittel arretierbar, wenn sie in Mehrzahl übereinandergestapelt sind. Zum Versand der Bandwickel dient üblicherweise eine Kartonverpackung mit schalenförmigen Kunststoffeinsätzen. Diese Verpackung ist unwirtschaftlich und umständlich in der Handhabung. Hinsichtlich einer einfachen Abfallbeseitigung ist die Verwendung von Einsatzschalen aus Polystyrolschaum oder ähnlichen Schaummaterialien nachteilig.

Mit der AT-A Nr. 343386 ist ein Spulenbehälter für eine einzige Bandspule bekannt, worin einander gegenüberliegende zylindrische Wandzonen als Spulenkernhalterung durch die Spulenmittelöffnung hindurchgreifen und für den Spulenkörper ein abgeschlossener Ringraum zur Verfügung steht. Die Behälterteile sind dabei lösbar miteinander verbunden und bilden geschlossen eine Tortenschachtelform.

Mit der DE-OS Nr. 2655254 ist eine Palette für flanschlose Bandwickel bekannt, die sehr flach und nur mit einer axial wirksamen Kernhalterung für einen Wickelkern ausgebildet ist. Je zwei solcher Paletten bilden zusammen mit einer Schrumpfschlauchfolie die Verpackung für einen Bandwickelstapel. Damit sind jedoch nur die Ober- und Unterseite des Stapels wirksam gegen Beschädigungen geschützt, nicht dagegen die Mantelfläche des Stapels. Auch gegen seitliches Verrutschen der Bandwickel sind diese ohne weiteres nicht gesichert. Überdies bestehen die bekannten Paletten wiederum aus dem nicht ohne weiteres umweltfreundlichen Polystyrolschaum. Die Vorteile dieser Paletten kommen erst zum Tragen, wenn bereits miteinander verriegelte Wickelkerne benutzt werden, so dass oben und unten die Paletten zur Abdeckung dienen, wobei ausserdem noch Massnahmen zum Zusammenhalten des Stapels in axialer Richtung notwendig sind.

Mit dem DE-GM Nr. 7826880 ist dagegen eine umweltfreundlichere, da aus Wellpappe bestehende Faltverpackung für Bandwickelstapel bekannt geworden, die in der Handhabung allerdings umständlich ist und die Erfordernisse des Staubschutzes nicht erfüllt.

Es ist Aufgabe der vorliegenden Erfindung, eine Verpackung der eingangs definierten Art — auch bei Verwendung von Kunststoffmaterial — einfach zerkleinerbar und dadurch auf ein geringeres Volumen verkleinerbar zu machen. Diese Aufgabenstellung ist neu, aus dem Stand der Technik nicht herleitbar und daher für den Fachmann nicht naheliegend. Als weitere Aufgabenstellung wird es angesehen, einen Mehrfachbehälter für Aufzeichnungsträger aller Art bereitzustellen, der auch staubsicher ist und eine genügende Festigkeit für schwere Aufzeichnungsträger aufweist.

Die Aufgabe wird dadurch gelöst, dass der Bodenteil im wesentlichen flach und der Deckelteil zylindrisch als Tortenschachteldeckel ausgebildet ist, und dass Boden- und Deckelteil aus brechbarem Material, insbesondere Hartschaumstoff, hergestellt sind, und dass für die Zerkleinerung, vorzugsweise am Deckelteil, Sollbruchkerben ausgebildet sind.

Dadurch wird für solche Behälter aus Kunststoffmaterial, insbesondere aus Hartschaumkunststoff, sowohl eine wirtschaftliche Herstellung möglich als auch eine vorteilhafte Entsorgung, ohne dass Spezialmaschinen für deren Zerkleinerung benutzt werden müssen.

In vorteilhaften Ausbildungen des Behälters können die Sollbruchkerben radial angeordnet sein und gegebenenfalls in der Verlängerung als Mantellinien verlaufen, und/oder sie können kreisringförmig sein.

Für einen ausgezeichneten Staubschutz ist es erfindungsgemäss zweckmässig, dass der Bodenteil mit einer ringförmigen Aussparung und der Deckelteil mit einem passenden Ringvorsprung ausgebildet ist, so dass zwischen Boden- und Deckelteil eine indirekte Trennfuge entsteht.

Praktisch günstig ist der Bodenteil im wesentlichen flach und der Deckelteil tortenschachteldeckelartig ausgebildet, wobei vorzugsweise der Deckelteil die Sollbruchkerben aufweist. Dadurch kann der volumenmässig grössere Teil leicht zerkleinert werden, und der jeweils andere Teil dient als feste Auflage für den Stapel der Aufzeichnungsträger.

In weiterer zweckmässig Ausführung der erfindungsgemässen Verpackung können Trennaussparungen an einem der Boden- und Deckelteile in unmittelbarer Nähe der Trennfuge und am Ende von radialen Sollbruchkerben ausgebildet sein. Dadurch ist ein Abheben des Deckelteils von Hand problemlos möglich, wodurch ein vorzeitiges Zerbrechen der Verpackung verhindert wird.

Hinsichtlich einer besseren Stapelbarkeit und einer Sicherheit gegen radiales Verrutschen solcher Verpackungen ist es zweckmässig, wenn Boden- und Deckelteile aussen mit ineinanderpassender Ringausnehmung und einem Ringrand zur radialen Verriegelung mehrerer aufeinandergestapelter Verpackungen versehen sind.

Vorteilhaft kann die Zentralhalterung als Zylinderansatz am Boden- und/oder Deckelteil ausgebildet sein, so dass ein seitliches Verrutschen der Aufzeichnungsträger auch ohne spezielle Selbstarretierung erreichbar ist. Zweckmässig kann der Bodenteil mit einem solchen Zylinderansatz versehen sein, der Fingeraussparungen zum besseren Erfassen oder Spulen an deren Innenumfang besitzt.

Einzelheiten der Erfindung sind aus einem Ausführungsbeispiel der Verpackung, das nachfolgend beschrieben und in der Zeichnung dargestellt ist, entnehmbar. Es zeigen:

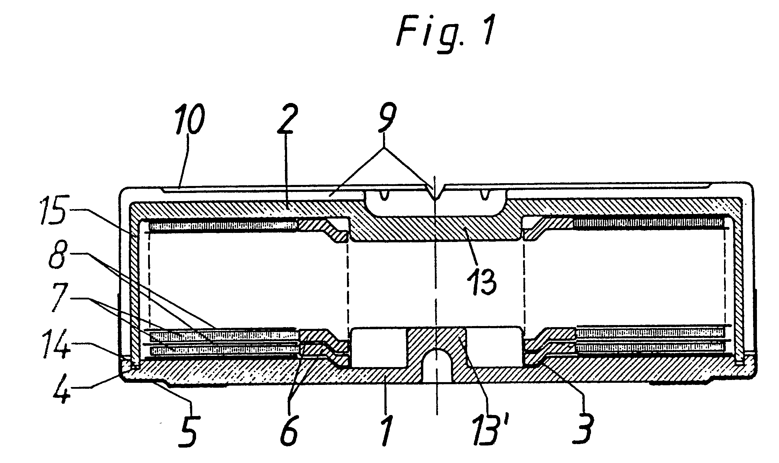

Fig. 1 einen Querschnitt gemäss Schnittlinie I-I durch einen Verpackungsbehälter mit Bandwickeln auf Ringkernen,

Fig. 2 eine perspektivische Aussenansicht des Behälters, und

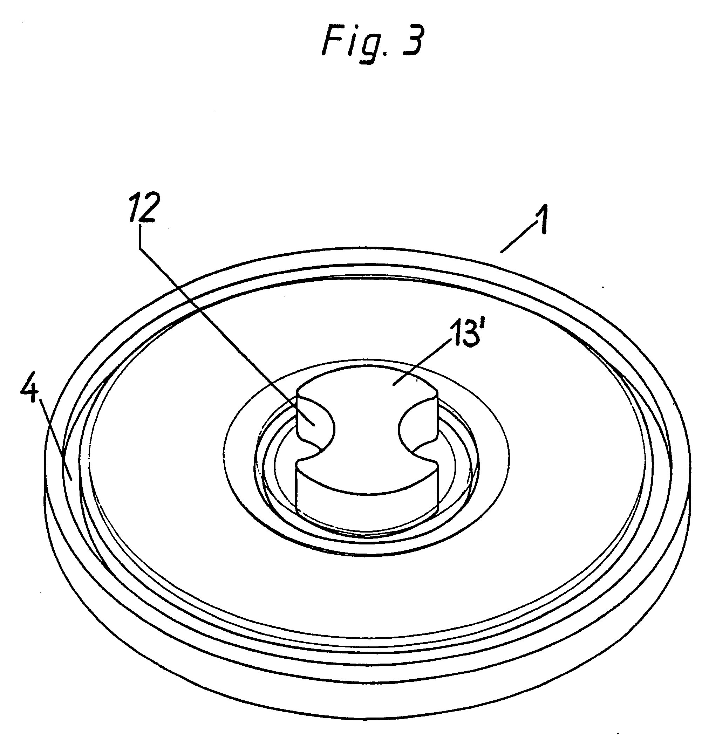

Fig. 3 den Bodenteil des Behälters in perspektivischer Ansicht.

Der Behälter besteht aus einem flachen Bodenteil 1 und einem tortendeckelförmigen Deckelteil 2, die miteinander etwa luftdicht verbindbar sind. Es ist ebenso möglich, den Bodenteil 1 als Tortendeckel und den Deckelteil 2 flach auszubilden, da die Unter- und Oberseite des Behälters nicht von vornherein festgelegt ist. Erst durch die Anformung der weiter unten beschriebenen Sollbruchkerben muss die Festigkeit der Teile eingestellt werden, und dabei ist es unabhängig von der Form des Bodenteils wichtig, dass dieses das Gewicht des umschlossenen Stapels aufnehmen kann.

Durch die fast luftdichte Verbindung der Boden- und Deckelteile 1 und 2 sind die Aufzeichnungsträger allseitig umschlossen und gegen Staub, Feuchtigkeit, Temperatur und mechanische Einflüsse bei der Handhabung oder beim Transport geschützt. Im Hinblick auf die wirtschaftlich günstige Herstellung durch Schäumen besteht der Behälter vorzugsweise aus Hartschaumstoff, insbesondere aus Polystyrolschaumstoff; er kann jedoch auch aus anderen Materialien, wie Pappe, oder aus festeren Kunststoffen hergestellt werden, wenn z.B. eine grössere Festigkeit verlangt ist. Zur guten Abdichtung ist der Deckelteil 2 am unteren Rand mit einem Ringfortsatz 14 ausgebildet. Der Bodenteil 1 ist mit einer entsprechenden Ringnut 4 versehen. Beim dargestellten Behälter sind Bodenteil 1 und Deckelteil 2 mit einem Zylinderansatz 13' bzw. 13 versehen, wobei der Zylinderansatz 13' sich durch Fingeraussparungen 12 am Umfang vom Ansatz 13 unterscheidet. Dadurch wird eine Entnahme der untersten Aufzeichnungsträger oder Ringkörper am Innenumfang erleichtert. Der Kreisumfang des Zylinderansatzes ist etwas kleiner als der Innenumfang der Aufzeichnungsträger oder Ringkörper, damit ein einfaches Einsetzen und Entnehmen gewährleistet ist. Die dargestellten Ringkerne 6 besitzen eine im wesentlichen schüsselartige, stapelbare und radial selbstverriegelnde Form. Eine Ringeinbuchtung 3 – um den Zylinderansatz 13 im Bodenteil 1 angeordnet – nimmt den unteren Teil des untersten Ringkerns 6 auf und ist entsprechend dimensioniert. Zwischen den flanschlosen Ringwickeln 7 sind dünne Papier- oder Folienzwischenlagen zum Schutz der Bandkanten vorgesehen. Durch den Eingriff der Zylinderansätze 13 und 13' oben und unten in die Wickelkerne 6 wird eine gute axiale und radiale Sicherung des umschlossenen Stapels gegen mechanische Kräfte erreicht. Eventuell können noch Verschlussklebebänder 11 benutzt werden, um die Boden- und Deckelteile 1 und 2 sicher zu verbinden. Verschnüren oder andere Verschlussarten können ebenfalls benutzt werden.

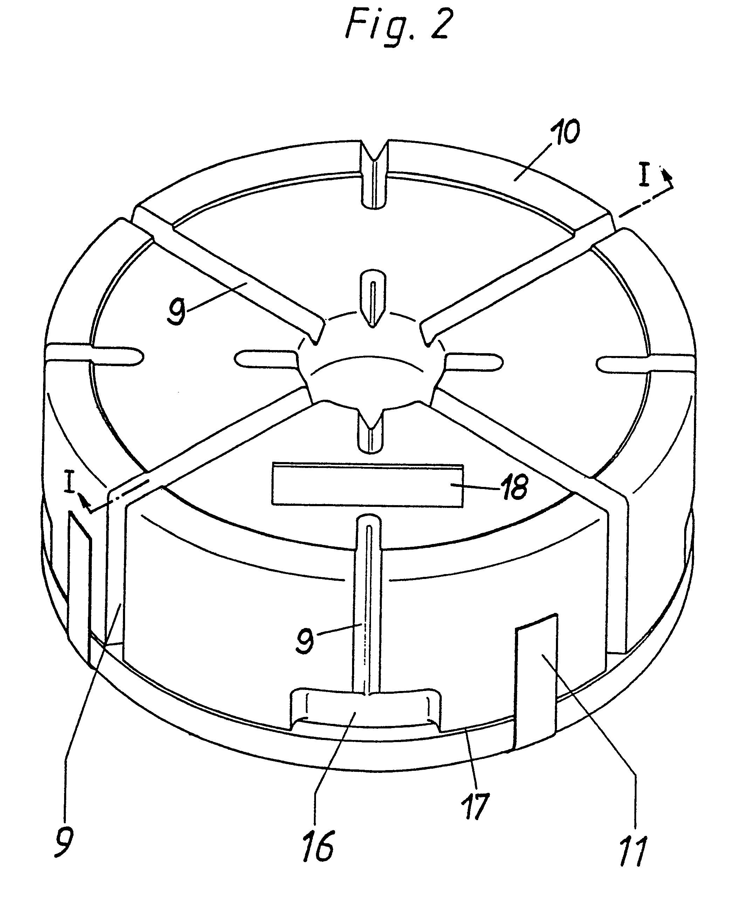

Zur Erleichterung der Trennung von Deckel- und Bodenteilen 1 und 2 sind Trennaussparungen 16 unmittelbar an der Trennfuge 17 vorgesehen. Wie besonders Fig. 2 zeigt, sind in diesem Ausführungsbeispiel eine Reihe von Sollbruchkerben 9 von unterschiedlicher Länge und Anordnung, jedoch im wesentlichen radial orientiert, vorgesehen. Eine ringförmige Orientierung oder sekantiale Anordnung sind mit der radialen Richtung der Kerben beliebig kombinierbar, je nachdem, welche Form und Grösse die zerkleinerten Stücke erhalten sollen. Dabei ist es selbstverständlich oberstes Gebot, eine ausreichende Festigkeit des oder der mit Sollbruchkerben versehenen Teile sicherzustellen, bei der Handhabung und Versendung solcher Behälter vom Füllen bis zur Entnahme der Aufzeichnungsträger. Der Querschnitt der Sollbruchkerben 9 ist dreieckig gewählt, es sind jedoch auch andere Querschnittsformen wie Rechteck, Kreisabschnitt usw. denkbar. Die schmalste denkbare Querschnittsform ist ein schmaler Sägeeinschnitt, der vorteilhaft das Brechen nur in einer Richtung zulässt, in der anderen Richtung einen Widerstand entgegensetzt, wodurch die Festigkeit im wesentlichen erhalten bleibt.

Um in einem Stapel solcher Behälter ein gegenseitiges radiales Verschieben und damit eine mechanische Beschädigung zu verhindern, können die Aussenformen der Deckel- und Bodenteile 1 und 2 mit Ringrand 10 und entsprechend geformter Ringausnehmung 5 versehen sein. Eine rechteckförmige Vertiefung 18 dient z.B. zur Aufnahme eines Aufklebers.

Zusammengenommen ergeben sich gegenüber bekannten Verpackungen folgende Vorteile: komplette Verpackungsbehälter sind stapelbar mit Verriegelung gegen radiales Verrutschen. Der Behälter besitzt eine rundum feste Aussenwandung.

Einstufenförmige Ringvorsprünge und Ringausnehmungen gewährleisten Staubschutz und seitliche Verriegelung von Deckel und Boden und mehreren Behältern übereinander. Sollbruchstellen vereinfachen die raumsparende Zerkleinerung der Behälter.

## Patentansprüche

1. Verpackung für eine Mehrzahl von übereinandergestapelten Aufzeichnungsträgern, insbesondere als Bandwickel (7) oder -spulen auf ringförmigen Wickelkernen (6) bzw. Flanschspulen aufgewickelte bandförmige Aufzeichnungsträger, wobei zumindest einem der Aufzeichnungsträger oder der Wickelkerne oder einer der Flanschspulen eine Zentralhalterung (13) zugeordnet ist, und mindestens zwei in der Draufsicht etwas grösser als die Draufsichtfläche der Aufzeichnungsträger oder der vollen Wickelkerne bzw. der Flanschspulen ausgebildete Boden- und Deckelteile (1 bzw. 2) vorgesehen sind, wobei die Boden- und Deckelteile lösbar miteinander verbunden sind und geschlossen eine Tortenschachtelform bilden, dadurch gekennzeichnet, dass der Bodenteil (1) im wesentlichen flach und der Deckelteil (2) zylindrisch als Tortenschachteldeckel ausgebildet ist, und dass Boden- und Deckelteil aus brechbarem Material, insbesondere Hartschaumstoff, hergestellt sind, und dass für die Zerkleinerung, vorzugsweise am Deckelteil (2), Sollbruchkerben (9) ausgebildet sind.

2. Verpackung nach Anspruch 1, dadurch gekennzeichnet, dass die Sollbruchkerben (9) radial angeordnet sind und gegebenenfalls in der Verlängerung als Mantellinien verlaufen.

3. Verpackung nach Anspruch 1, dadurch gekennzeichnet, dass die Sollbruchkerben kreisringförmig angeordnet sind.

4. Verpackung nach einem der Ansprüche 1 bis 3, dadurch gekennzeichnet, dass der Bodenteil (1) mit einer ringförmigen Aussparung (4) und der Deckelteil (2) mit einem passenden Ringvorsprung (14) ausgebildet ist, so dass zwischen Bodenteil (1) und Deckelteil (2) eine indirekte Trennfuge entsteht.

5. Verpackung nach Anspruch 4, dadurch gekennzeichnet, dass Trennaussparungen (16) an einem der Boden- und Deckelteile (1 und 2) in radialen Sollbruchkerben (9) ausgebildet sind.

6. Verpackung nach einem der Ansprüche 1 bis 5, dadurch gekennzeichnet, dass Boden- und Deckelteile (1 und 2) aussen mit ineinanderpassender Ringausnehmung (5) und Ringrand (10) zur radialen Verriegelung mehrerer aufeinandergestapelter Verpackungen versehen sind.

7. Verpackung nach einem der Ansprüche 1 bis 6, dadurch gekennzeichnet, dass die Zentralhalterung als Zylinderansatz (13, 13') am Boden- und/oder Deckelteil (1 und 2) ausgebildet ist.

8. Verpackung nach Anspruch 7, dadurch gekennzeichnet, dass der Bodenteil (1) mit einem Zylinderansatz (13') ausgeführt ist, der Fingeraussparungen (12) zum besseren Erfassen der Aufzeichnungsträger oder Ringkerne (6) oder Spulen an deren Innenumfang besitzt.

## Claims

1. A package for a plurality of stacked recording media, especially stacked rolls (7) of recording media in tape form wound on annular flangeless hubs or flanged reels, a central holding means (13) being associated with at least one of the recording media, hubs or flanged reels, and at least two parts (a bottom member [1] and a cover member [2]) being provided which are somewhat larger, in plan view, than the plan view area of the recording media or the fully wound hubs or flanged reels, which bottom and cover members are releasably connectable, and together have the shape of a circular cake storage container, wherein the bottom member (1) is substantially flat and the cover member (2) has the shape of a cylindrical hood; the bottom and cover members are produced from a breakable material, especially a rigid foam; and breaking grooves (9) are provided, preferably in the cover member (2), to facilitate breakage.

2. A package as claimed in Claim 1, wherein the breaking grooves (9) are arranged radially and, if desired, may be extended to occupy the positions of generating lines of a cylinder.

3. A package as claimed in Claim 1, wherein the breaking grooves are arranged in rings.

4. A package as claimed in any one of Claims 1 to 3, wherein the bottom member (1) is provided with an annular recess (4) and the cover member (2) with a matching annular projection (14), so that an indirect joint is formed between bottom member (1) and cover member (2).

5. A package as claimed in Claim 4, wherein finger recesses (16) are provided in the bottom member (1) or cover member (2) in the immediate vicinity of the line of separation, and are arranged at the end of radial breaking grooves (9).

6. A package as claimed in any one of Claims 1 to 5, wherein the bottom and cover members (1 and 2) are externally provided respectively with an annular recess (5) and an annular rim (10) which fit into one another, to prevent radial slippage of a plurality of stacked packages relative to one another.

7. A package as claimed in any one of Claims 1 to 6, wherein the central holding means is in the form of a cylindrical projection (13, 13') on the bottom member (1) and/or cover member (2).

8. A package as claimed in Claim 7, wherein the bottom member (1) is provided with a cylindrical projection (13') which has finger recesses (12) to make it easier to get hold of the recording media, hubs (6) or reels by their inner peripheries.

## Revendications

1. Emballage pour une pluralité de supports d'enregistrements empilés les uns sur les autres, en particulier des supports d'enregistrement en forme de bandes enroulées en rouleaux ou bobines sur des noyaux (6) d'enroulement ou bobines à flasques, un moyen de retenue central (13) étant associé à au moins un des supports d'enregistrement ou des noyaux d'enroulement ou à une des bobines à flasques et au moins deux parties fond et couvercle (1 et 2) étant prévues de dimensions, vues en plan, un peu plus grandes que la surface, vue en plan, des supports d'enregistrement ou des noyaux entièrement pleins ou des bobines à flasques, ces parties fond et couvercle étant reliées l'une à l'autre de façon séparable et formant, une fois fermée, une sorte de boîte à tarte, caractérisé par le fait que la partie fond (1) est sensiblement plate et la partie couvercle (2) est cylindrique en forme de couvercle de boîte à tarte, et ces deux parties sont fabriquées en une matière qui peut se rompre, en particulier en matière alvéolaire dure, et des encoches de rupture (9) sont prévues pour le fractionnement, de préférence sur la partie couvercle (2).

2. Emballage selon la revendication 1, caractérisé par le fait que les encoches de rupture (9) sont disposées radialement et éventuellement se prolongent comme génératrices.

3. Emballage selon la revendication 1, caractérisé par le fait que les encoches de rupture sont disposées en forme d'anneau circulaire.

4. Emballage selon l'une des revendications 1 à 3, caractérisé par le fait que la partie fond (1) comporte un évidement annulaire (4) et la partie couvercle (2) comporte une saillie annulaire (14) correspondante, de sorte qu'il existe une fente de séparation entre les deux parties (1 et 2).

5. Emballage selon la revendication 4, caractérisé par le fait que sont prévus des évidements de séparation (16) sur l'une des parties fond et couvercle (1 et 2) au voisinage immédiat de la fente de séparation et à l'extrémité d'encoches de rupture (9).

6. Emballage selon l'une des revendications 1 à 5, caractérisé par le fait que les parties fond et couvercle (1 et 2) sont munies, à l'extérieur, d'un évidement annulaire (5) et d'un rebord annulaire (10) se correspondant pour verrouiller radialement plusieurs emballages empilés l'un sur l'autre.

7. Emballage selon l'une des revendications 1 à 6, caractérisé par le fait que le moyen de retenue central est une pièce cylindrique (13, 13') sur la partie fond et/ou couvercle (1 et 2).

8. Emballage selon la revendication 7, caractérisé par le fait que la partie fond (1) est réalisée avec une saillie cylindrique (13') qui présente des évidements (12) destinés à assurer une meilleure saisie, par leur périphérie interne, des supports d'enregistrement ou noyaux annulaires (6) ou bobines.

## Fig. 1

# Fig. 2

# Fig. 3

12

1

13'

4